# EUROPEAN PATENT APPLICATION

(11) **EP 4 465 559 A1**
(43) Date of publication of application: **20.11.2024**
(21) Application number: 24175269.0
(22) Date of filing: 10.05.2024
(51) Int. Cl.: H04J 11/00, H04B 17/318

(54) **UE-BASED INTERFERENCE CANCELLATION IN 5G NETWORKS**

(30) Priority: 12.05.2023 US 202318197034
(71) Applicant: T-Mobile USA, Inc., Bellevue, WA 98006-1350 (US)
(72) Inventor: KWOK, Ming Shan, Bellevue, 98006-1350 (US); SHAHID, Wafik Abdel, Bellevue, 98006-1350 (US)
(74) Representative: Suddaby, Mark Edward

(57) **Abstract**

System and methods for estimating a reference signal received power (RSRP) for a reference signal of a serving cell for a user equipment (UE), based on measuring received reference signals and removing a contribution of an interfering cell from the reference signals, are described herein. The reference signals may be received on a same frequency at a same transmission time interval by the UE. At least one of the serving cell and the interfering cell may be associated with Fifth Generation (5G) or later technology.

## Description

### BACKGROUND

In Long Term Evolution (LTE) networks, interference cancellation for signals received by a user equipment (UE) was achieved by removing a cell reference signal (CRS) transmitted by an interfering cell from a serving cell signal. In Fifth Generation (5G) networks, the base station (gNode B - gNB) does not transmit the CRS, and interference cancelation in 5G networks cannot rely on use of the CRS. Interference with reference signals can effect accuracy of measurements, such as reference signal received power (RSRP), used in, e.g., mobility decisions and other actions for managing a UE.

### BRIEF DESCRIPTION OF THE DRAWINGS

The detailed description is described with reference to the accompanying figures. In the figures, the left-most digit(s) of a reference number identifies the figure in which the reference number first appears. The same reference numbers in different figures indicate similar or identical items.

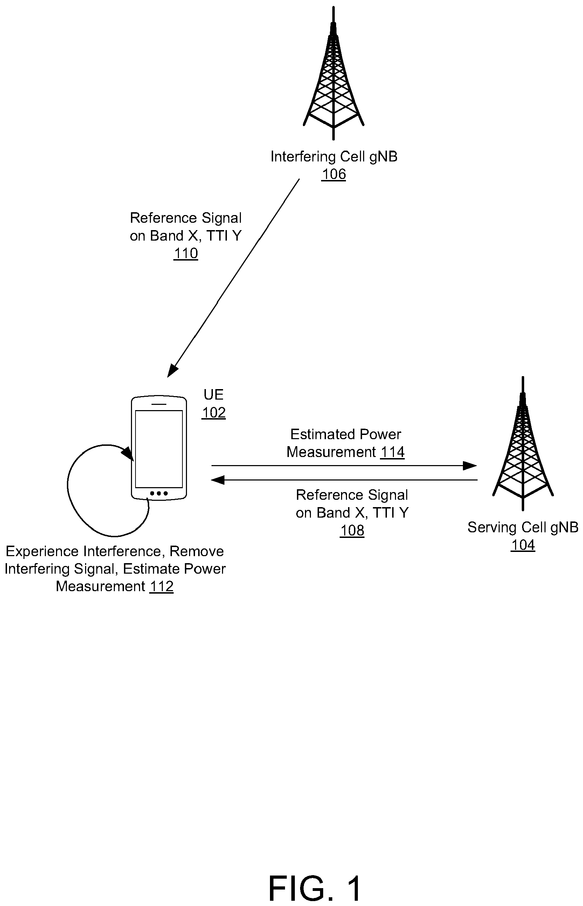

FIG. 1 is a schematic diagram of an illustrative wireless communication network environment in which a UE receives a reference signal from a serving cell and a reference signal from an interfering cell, measures the reference signals and removes the contribution of the interfering cell, and estimates a RSRP of the reference signal from the serving cell.

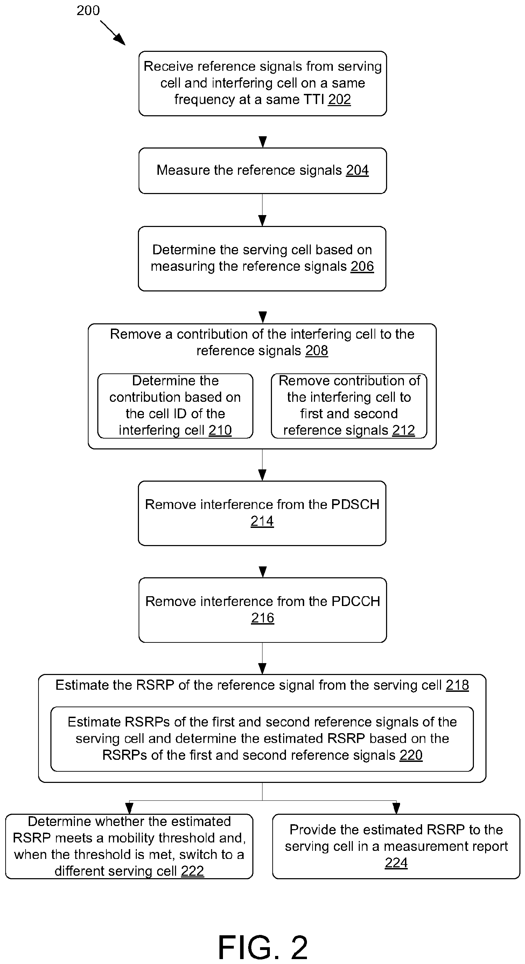

FIG. 2 is a flow diagram of an illustrative process for measuring reference signals received by a UE, removing contributions from an interfering cell from the reference signals, and estimating an RSRP for the reference signal of the serving cell based on the measuring and the removing.

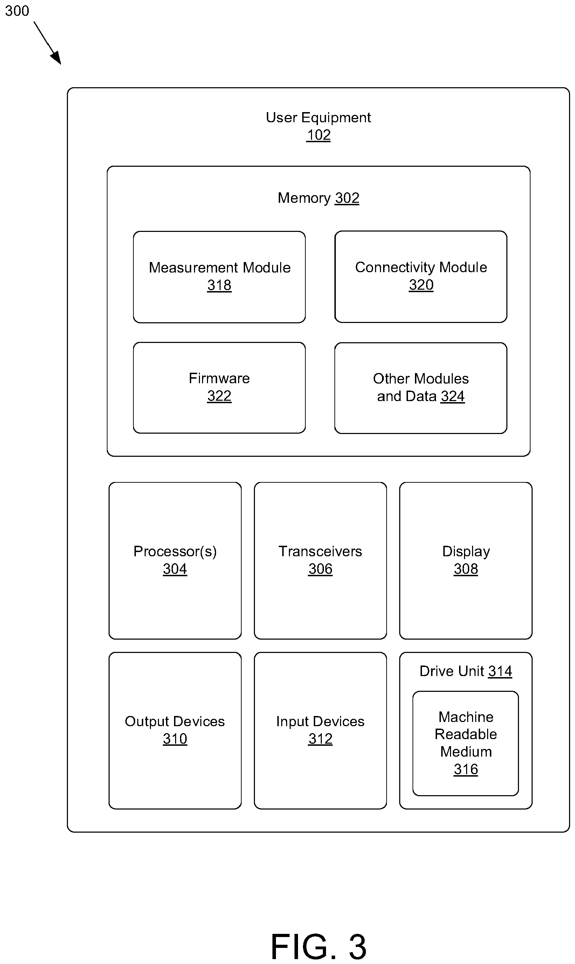

FIG. 3 is a schematic diagram of an example system architecture of a UE that is configured to measure received reference signals, remove contributions from an interfering cell from the reference signals, and estimate an RSRP for the reference signal of the serving cell based on the measuring and the removing.

### DETAILED DESCRIPTION

This disclosure is directed in part to UE configured to remove a contribution of an interfering 5G cell from reference signals received at a same transmission time interval (TTI) on a same frequency and, based at least on the removing, estimate a power measurement of the reference signal received from a serving 5G cell.

In some implementations, a UE may be within range of multiple 5G cells and receive transmissions from their respective gNBs. Some of these transmissions, such as synchronization signal blocks (SSBs) or channel state information-reference signal (CSI-RS), may be received at a same TTI on a same frequency. In addition to reference signals, other transmissions, such as physical downlinks control channel (PDCCH) and physical downlink shared channel (PDSCH) may also experience interference.

The UE may proceed by measuring the reference signals and determining, based on the measuring, the UE's serving cell. Determining the serving cell may enable the UE to identify interfering parts of the received reference signals by cell identifier (also referred to herein as "cell ID"). Those parts of the reference signals associated with the cell ID of the serving cell may be retained, and those associated with the cell ID of other cells may be removed as contributions from interfering cells.

In addition to removing contributions of interfering cell(s) from reference signals, the UE may remove contributions of interfering cell(s) from received PDCCH transmissions, again based on cell IDs. The UE may remove contributions of interfering cell(s) from received PDSCH transmissions by cancelling physical resource blocks (PRBs) from the interfering cell(s), those interfering cell(s) again identified by cell ID.

In various implementations, based on measuring the reference signals, determining the serving cell, and removing the contributions of the interfering cell(s), the UE estimates power measurement(s), such as RSRP of the reference signal of the serving cell. Such an estimate may comprise a measurement of power of the received reference signals after removal of the contributions of the interfering cell(s).

In some implementations, the UE may then compare the power measurement(s) to a mobility threshold received from the 5G network of the serving cell gNB. If the power measurement(s), such as the RSRP, meet the mobility threshold, the UE may switch to a different serving cell.

In further implementations, the UE may include the power measurement(s) in measurement report(s) that it provides to the serving cell gNB.

In various examples, the UE may receive multiple types of reference signals (e.g., both SSB and CSI-RS) that are interfered with. The UE may remove interfering contributions from the reference signals of both types and estimate the power measurement(s) for those reference signals. The UE may then determine the estimate of the power measurement(s) for, e.g., mobility management and reporting based on a combination of the estimates.

### Example Environment

FIG. 1 is a schematic diagram of an illustrative wireless communication network environment in which a UE receives a reference signal from a serving cell and a reference signal from an interfering cell, measures the reference signals and removes the contribution of the interfering cell, and estimates a RSRP of the reference signal from the serving cell. As illustrated, a UE 102 may be served by a serving cell gNB 104 and in range of an interfering cell gNB 106. The UE 102 may receive a reference signal 108 at a frequency/band and at a transmission time interval (TTI). The UE 102 may also receive a reference signal 110 at the same frequency/band and the same TTI. Thus, the reference signal 110 causes the UE 102 to experience interference. At 112, the UE 102 removes the contribution of the interfering cell gNB 106 from the reference signals 108 and 110 (e.g., removes the reference signal 110) and, based on the removing, estimates a power measurement (e.g., RSRP) for the reference signal 108. The UE 102 may then provide the estimated power measurement 114 in a measurement report to the serving cell gNB 104.

In various implementations, the UE 102 may be any sort of UE configured to communicate with at least network of 5G of later technology. The UE 102 may be a mobile device, such as a cell phone, a watch, goggles, glasses, an Internet-of-Things (IoT) device, a tablet computer, a laptop computer, a personal computer (PC), or any sort of computing device capable of mobility and wireless communication. An example architecture for a UE 102 is illustrated in FIG. 3 and described below in detail with reference to that figure.

The serving cell gNB 104 and interfering cell gNB 106 may be the same type of base stations or different types. Both may be associated with 5G or later technology and may have cells of the same or different sizes. Each of the serving cell gNB 104 and interfering cell gNB 106 may be any of a macrocell, a microcell, a picocell, a femtocell, etc. with a corresponding range. As noted herein, the range of the serving cell gNB 104 and interfering cell gNB 106 overlap such that a UE 102 in a location where the ranges overlap experiences some or all of the signals of the interfering cell gNB 106 as interference with its reception of the serving cell gNB 104. Each of the serving cell gNB 104 and interfering cell gNB 106 may have multiple antennas for transmission and reception of signals and may be configured to transmit those signals at differing levels transmission power. Also, serving cell gNB 104 and interfering cell gNB 106 may transmit reference signals 108 and 110, such as SSB or CSI-RS, at a same TTI and on a same frequency/band (e.g., n71 band), and data and control messaging, such as PDCCH and PDSCH. The serving cell gNB 104 and interfering cell gNB 106 may also transmit and receive other message types.

Providing coverage that does not drop but which has minimal overlap of cells is a challenge all telecommunication network operators face, with the result often being areas of overlap where interfering signals are avoiding by limiting the use of spectrum or by removing interfering signals. As described herein, the UE 102 is configured to remove, at 112, interfering signals, at least from some reference signals (e.g., reference signals 108 and 110), PDCCH, and PDCCH, based at least in part on cell IDs of the signals. The chipsets and firmware of the UE 102 are configured to identify parts of signals on a given frequency at a same TTI based on cell IDs and remove all but the parts associated with the serving cell (e.g., the serving cell of service cell gNB 104). The UE 102 may also be configured to identify the serving cell, e.g., based on measurements of reference signals 108 and 110. Once the signals are received and the serving cell is identified, the UE 102 is able to remove, at 112, the contributions of the interfering cells (e.g., the interfering cell of interfering cell gNB 106).

In various implementations, at 112, the UE 102 also measures the power of the received reference signals 108 and 110 after the interfering contributions (e.g., reference signals 110) have been removed and estimates a power measurement 114 (e.g., the RSRP) for the reference signal 108 of the serving cell. The UE 102 may then provide the estimated power measurement 114 as part of the measurement report sent to the serving cell gNB 104.

In some implementations, the UE 102 is also configured to determine, based on the estimated power measurement, whether to continue with the serving cell of the service cell gNB 104 or to switch to a different serving cell and different gNB. The UE 102 may determine whether to make the switch based on a mobility threshold received from the 5G network associated with the serving cell gNB 104. When the mobility threshold is met, the UE 102 determines a target serving cell to switch to and executes a switch to that serving cell. With such a move, the interfering cell gNB 106 could become the gNB of the new serving cell, and the cell of the old serving cell gNB 104 could either be interfering or out of range. The target serving cell may also be a serving cell not illustrated in FIG. 1.

As is also noted herein, the UE 102 may receive reference signals and interfering signals of multiple reference signal types. For example, the UE 102 could receive an SSB from the serving cell gNB 104 and an interfering SSB from the interfering cell gNB 106 and also receive a CSI-RS from the serving cell gNB 104 and an interfering CSI-RS from the interfering cell gNB 106. The UE 102 may remove the interfering contributions from each of the SSBs and the CSI-RSs, estimate the power measurements for each of the SSB from the serving cell and the CSI-RS from the serving cell, and combine the estimated power measurements in some manner to arrive at a power measurement (e.g., RSRP) for the serving cell.

### Example Operations

FIG. 2 illustrates an example process. This process is illustrated as a logical flow graph, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be omitted or combined in any order and/or in parallel to implement the processes.

FIG. 2 is a flow diagram of an illustrative process 200 for measuring reference signals received by a UE, removing contributions from an interfering cell from the reference signals, and estimating an RSRP for the reference signal of the serving cell based on the measuring and the removing. At 202, the UE receives reference signals from a serving cell and an interfering cell. The reference signals are received on a same frequency at a same transmission time interval. Also, the reference signals may include a SSB or a CSI-RS. At least one of the serving cell or the interfering cell is associated with 5G or later technology.

At 204, the UE measures the reference signals. For example, the UE may measure the power of the reference signals.

At 206, the UE determines the serving cell based on the measuring of the reference signals.

At 208, the UE removes a contribution of the interfering cell to the reference signals. The removing may include, at 210, determining the contribution to the reference signals based at least in part on a cell identifier of the interfering cell. Also, in examples where the reference signals include at least first reference signals of a first reference signal type and second reference signals of a second reference signal type, the removing may include, at 212, removing a contribution of the interfering cell to the first reference signals and removing a contribution of the interfering cell to the second reference signals.

At 214, the UE may remove interference from a PDSCH received by the UE.

At 216, the UE may remove interference from a PDCCH received by the UE.

At 218, based at least in part on the measuring, the determining, and the removing, the UE estimates a RSRP of the reference signal from the serving cell. When the reference signals include first and second reference signals, the estimating may include, at 220, estimating a first RSRP of a first reference signal of the first reference signals for the serving cell, estimating a second RSRP of a second reference signal of the second reference signals for the serving cell, and determining the estimated RSRP based on the first RSRP and the second RSRP.

At 222, the UE may determine whether the estimated RSRP meets a mobility threshold and, when the mobility threshold is met, switch to a different serving cell.

At 224, the UE may provide the estimated RSRP to the serving cell in a measurement report.

### Example Architecture

FIG. 3 is a schematic diagram of an example system architecture 300 of a UE, such as UE 102. The UE 102 is configured to measure received reference signals, remove contributions from an interfering cell from the reference signals, and estimate an RSRP for the reference signal of the serving cell based on the measuring and the removing. The UE 102 can have at least one memory 302, processor(s) 304, one or more transceivers 306, a display 308, output devices 310, input devices 312, and/or a drive unit 314 including a machine readable medium 316. The memory 302 may include a measurement module 318, a connectivity module 320, firmware 322, and other modules and data 324.

In various examples, the memory 302 can include system memory, which may be volatile (such as RAM), non-volatile (such as ROM, flash memory, etc.) or some combination of the two. The memory 302 can further include non-transitory computer-readable media, such as volatile and nonvolatile, removable and non-removable media implemented in any method or technology for storage of information, such as computer readable instructions, data structures, program modules, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium which can be used to store the desired information and which can be accessed by the UE 102. Any such non-transitory computer-readable media may be part of the UE 102.

The memory 302 can include one or more software or firmware elements, such as computer-readable instructions that are executable by the one or more processors 304. For example, the memory 302 can store computer-executable instructions associated with measurement module 318, a connectivity module 320, firmware 322, and other modules and data 324. The measurement module 318 may perform actions described herein such as measuring the power of signals, estimating power measurements, and generating and sending measurement reports. The connectivity module 320 may be determine whether to remain with the serving cell or switch to a different serving cell based on the estimated power measurement. The firmware 322 may remove contributions of interfering cells from received signals based, e.g., on cell IDs. The memory 302 can also store other modules and data 324, which can be utilized by the UE 102 to perform or enable performing any action taken by the UE 102. The other modules and data 324 can include a UE platform, operating system, and applications, and data utilized by the platform, operating system, and applications.

In various examples, the processor(s) 304 can be a CPU, a graphics processing unit (GPU), or both CPU and GPU, or any other type of processing unit. Each of the one or more processor(s) 304 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processor(s) 304 may also be responsible for executing all computer applications stored in the memory 302, which can be associated with types of volatile (RAM) and/or nonvolatile (ROM) memory.

The transceivers 306 can include modems, interfaces, antennas, and/or other components that perform or assist in exchanging RF communications with base stations, such as the serving cell gNB 104 or the interfering cell gNB 106, a Wi-Fi access point, or otherwise implement connections with one or more networks. The transceivers 306 can be compatible with one or more radio access technologies, such as 5G NR radio access technologies.

The display 308 can be a liquid crystal display or any other type of display commonly used in UEs. For example, the display 308 may be a touch-sensitive display screen and can thus also act as an input device or keypad, such as for providing a soft-key keyboard, navigation buttons, or any other type of input.

The output devices 310 can include any sort of output devices known in the art, such as the display 308, speakers, a vibrating mechanism, and/or a tactile feedback mechanism. Output devices 310 can also include ports for one or more peripheral devices, such as headphones, peripheral speakers, and/or a peripheral display.

The input devices 312 can include any sort of input devices known in the art. For example, input devices 312 can include a microphone, a keyboard/keypad, and/or a touch-sensitive display, such as the touch-sensitive display screen described above. A keyboard/keypad can be a push button numeric dialing pad, a multi-key keyboard, or one or more other types of keys or buttons, and can also include a joystick-like controller, designated navigation buttons, or any other type of input mechanism.

The machine readable medium 316 of a drive unit 314 can store one or more sets of instructions, such as software or firmware, that embodies any one or more of the methodologies or functions described herein. The instructions can also reside, completely or at least partially, within the memory 302, processor(s) 304, and/or transceiver(s) 306 during execution thereof by the UE 102.

Although features and/or methodological acts are described above, it is to be understood that the appended claims are not necessarily limited to those features or acts. Rather, the features and acts described above are disclosed as example forms of implementing the claims.

## Claims

1. A method comprising:
receiving, by a user equipment, UE, reference signals from a serving cell and an interfering cell, the reference signals received on a same frequency at a same transmission time interval;
measuring, by a UE, the reference signals;
determining, by the UE, the serving cell based on the measuring of the reference signals;
removing, by the UE, a contribution of the interfering cell to the reference signals; and
based at least in part on the measuring, the determining, and the removing, estimating, by the UE, a reference signal received power, RSRP, of the reference signal from the serving cell,
wherein at least one of the serving cell or the interfering cell is associated with Fifth Generation, 5G, or later technology.

2. The method of claim 1, wherein the reference signals include a synchronization signal block, SSB, or a channel state information - reference signal, CSI-RS.

3. The method of claim 1, wherein removing the contribution of the interfering cell to the reference signals comprises determining the contribution to the reference signals based at least in part on a cell identifier of the interfering cell.

4. The method of claim 1, further comprising:
determining whether the estimated RSRP meets a mobility threshold; and
when the mobility threshold is met, switching to a different serving cell.

5. The method of claim 1, further comprising:
removing interference from a physical downlink shared channel, PDSCH, received by the UE; and
removing interference from a physical downlink control channel, PDCCH, received by the UE.

6. The method of claim 1, wherein the reference signals include at least first reference signals of a first reference signal type and second reference signals of a second reference signal type;
wherein the removing further comprises removing a contribution of the interfering cell to the first reference signals and removing a contribution of the interfering cell to the second reference signals; and
wherein the estimating further comprises:
estimating, by the UE, a first RSRP of a first reference signal of the first reference signals for the serving cell;
estimating, by the UE, a second RSRP of a second reference signal of the second reference signals for the serving cell; and
determining the estimated RSRP based on the first RSRP and the second RSRP.

7. The method of claim 1, further comprising providing the estimated RSRP to the serving cell in a measurement report.

8. A user equipment, UE, comprising:
a processor;
a transceiver for sending and receiving signals; and
programming instructions that, when executed by the processor, cause the UE to perform operations including:
receiving, via the transceiver, reference signals from a serving cell and an interfering cell, the reference signals received on a same frequency at a same transmission time interval;
measuring the reference signals;
determining the serving cell based on the measuring of the reference signals;
removing a contribution of the interfering cell to the reference signals; and
based at least in part on the measuring, the determining, and the removing, estimating a reference signal received power, RSRP, of the reference signal from the serving cell.

9. The UE of claim 8, wherein at least one of the serving cell or the interfering cell is associated with Fifth Generation, 5G, or later technology.

10. The UE of claim 8, wherein the reference signals include a synchronization signal block, SSB, or a channel state information - reference signal, CSI-RS.

11. The UE of claim 8, wherein removing the contribution of the interfering cell to the reference signals comprises determining the contribution to the reference signals based at least in part on a cell identifier of the interfering cell.

12. The UE of claim 8, wherein the operations further include:
determining whether the estimated RSRP meets a mobility threshold; and
when the mobility threshold is met, switching to a different serving cell.

13. The UE of claim 8, wherein the operations further include:
removing interference from a physical downlink control channel, PDCCH, received by the UE; and
removing interference from a physical downlink shared channel, PDSCH, received by the UE.

14. The UE of claim 8, wherein the reference signals include at least first reference signals of a first reference signal type and second reference signals of a second reference signal type;
wherein the removing further comprises removing a contribution of the interfering cell to the first reference signals and removing a contribution of the interfering cell to the second reference signals; and
wherein the estimating further comprises:
estimating, by the UE, a first RSRP of a first reference signal of the first reference signals for the serving cell;
estimating, by the UE, a second RSRP of a second reference signal of the second reference signals for the serving cell; and
determining the estimated RSRP based on the first RSRP and the second RSRP.

15. A non-transitory computer storage medium having programming instructions stored thereon that, when executed by a user equipment, UE, cause the UE to perform the method of any one of claims 1 to 7.
